# EUROPEAN PATENT APPLICATION

(11) **EP 4 813 994 A1**
(43) Date of publication of application: **30.09.2026**
(21) Application number: 24893936.5
(22) Date of filing: 25.10.2024
(51) Int. Cl.: C07F 7/10, C08G 77/26

(54) **SOLID WATER-SOLUBLE POLYSILOXANE COMPOUND HAVING AMINO ACID-CONTAINING GROUP, AND METHOD FOR PRODUCING SAME**

(30) Priority: 22.11.2023 JP 2023198127
(71) Applicant: SHIN-ETSU CHEMICAL CO., LTD., Tokyo 100-0005 (JP)
(72) Inventor: NAKAZAWA, Koichi, Joetsu-shi, Niigata 942-8601 (JP); KIYOMORI, Ayumu, Joetsu-shi, Niigata 942-8601 (JP)
(74) Representative: Mewburn Ellis LLP
(86) International application number: PCT/JP2024/038087
(87) International publication number: WO 2025/109943

(57) **Abstract**

This solid water-soluble polysiloxane compound having an amino acid-containing group and represented by general formula (1) has a solid form, and therefore can be reduced in cost for storage and transportation, and can be easily re-dissolved to prepare a solution upon use. 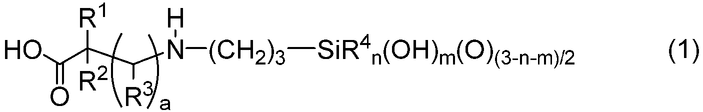 (In the formula, R¹, R², and R³ each independently represent a hydrogen atom or a substituted or unsubstituted monovalent hydrocarbon group having 1 to 20 carbon atoms; R⁴ represents a substituted or unsubstituted monovalent hydrocarbon group having 1 to 20 carbon atoms; a is 0 or 1; m is 0 or a positive number less than 3; n is 0 or 1; and n + m is 0 or a positive number less than 3.)

## Description

### TECHNICAL FIELD

The present invention relates to a solid water-soluble polysiloxane compound having an amino acid-containing group and a method for producing the same.

### BACKGROUND ART

An organosilicon compound having a hydrolyzable silyl group and an organic group facilitates bonding between an organic material and an inorganic material, which are generally difficult to bond to each other. This is because a silanol group generated by hydrolysis of the hydrolyzable silyl group forms a covalent bond with a hydroxyl group on the surface of the inorganic material, and the organic group reacts with the organic material. Among the above-described organosilicon compounds, an aminosilane compound having an amino group can increase the adhesiveness of an organic-inorganic composite material, since the amino group is highly reactive with various organic and inorganic materials.

With regard to the above-described aminosilane compound, a silane compound has been proposed which does not generate a volatile organic compound (VOC) such as methanol or ethanol during use in view of user safety and environmental protection. For example, an aminosilane compound having an amino group as disclosed in Patent Document 1 produces an organopolysiloxane composition such as a 3-aminopropylsilanetriol polymer upon hydrolysis, and the amount of alcohol generated can be reduced by removing the alcohol produced after the hydrolysis.

Patent Document 2 proposes that an aqueous solution containing an amino acid-modified silanol compound and a silanol can impart hydrophilicity and stain resistance to various organic and inorganic materials when used as a surface treatment agent.

### PRIOR ART DOCUMENTS

### PATENT DOCUMENTS

Patent Document 1: U.S. Patent Application Publication No. 2020/0068897
Patent Document 2: JP-A 2013-116872

### SUMMARY OF INVENTION

### TECHNICAL PROBLEM

However, in both patent documents, the products are in the form of an aqueous solution and therefore have a large volume, making it difficult to ensure sufficient storage space and leading to increased transportation costs. In addition, aqueous solutions present issues regarding storage stability.

The present invention has been made in view of the above circumstances, and an object thereof is to provide a water-soluble polysiloxane compound, having an amino acid-containing group, which can reduce storage and transportation costs since the compound is in solid form and which can be readily redissolved for use as a solution, and a method for producing the compound.

### SOLUTION TO PROBLEM

As a result of intensive studies aimed at achieving the above object, the present inventors have found that, since a water-soluble polysiloxane compound having a predetermined amino acid-containing group is in solid form, the required storage capacity can be reduced as compared with compounds in liquid form, resulting in not only reduced storage and transportation costs but also high stability against heat, light, and oxygen. The present inventors have also found that, since an aqueous solution obtained by redissolving the above-described compound is substantially the same as an aqueous solution before drying, the compound can be used for a longer period of time. Thus, the present inventors have completed the present invention.

That is, the present invention provides:
1. A solid water-soluble polysiloxane compound having an amino acid-containing group, the compound being represented by the following general formula (1): 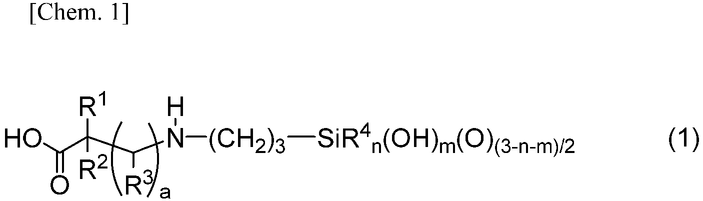 wherein R¹, R², and R³ each independently represent a hydrogen atom or a substituted or unsubstituted monovalent hydrocarbon group having 1 to 20 carbon atoms, R⁴ represents a substituted or unsubstituted monovalent hydrocarbon group having 1 to 20 carbon atoms, a is 0 or 1, m is 0 or a positive number less than 3, n is 0 or 1, and n + m is 0 or a positive number less than 3; and
2. A method for producing the solid water-soluble polysiloxane compound having an amino acid-containing group according to 1, the method including mixing a silane compound having an amino acid ester-containing group with water to perform a hydrolysis reaction and subsequently drying the mixture, the silane compound being represented by the following general formula (2): 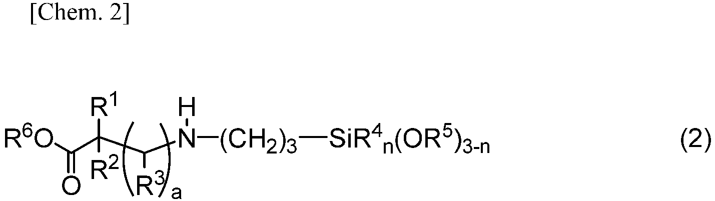 [wherein R¹ to R⁴, a, and n are as defined above, R⁵ represents a substituted or unsubstituted monovalent hydrocarbon group having 1 to 20 carbon atoms, and R⁶ represents a substituted or unsubstituted monovalent hydrocarbon group having 1 to 20 carbon atoms or a triorganosilyl group represented by the following general formula (3):

   -SiR⁷R⁸R⁹ (3)

   (wherein R⁷, R⁸, and R⁹ each independently represent an unsubstituted monovalent hydrocarbon group having 1 to 20 carbon atoms)].

### ADVANTAGEOUS EFFECTS OF INVENTION

Since a water-soluble polysiloxane compound having an amino acid-containing group according to the present invention is in solid form, not only storage and transportation costs can be reduced but also high stability against heat, light, and oxygen can be achieved as compared with compounds in liquid form.

In addition, since an aqueous solution obtained by redissolving the water-soluble polysiloxane compound according to the present invention is substantially the same as an aqueous solution before drying, the compound can be used for a longer period of time without changes in physical properties.

### BRIEF DESCRIPTION OF DRAWINGS

[FIG. 1] FIG. 1 shows the ¹H-NMR spectrum of an aqueous solution obtained in Example 1-1 after atmospheric distillation, the aqueous solution containing an N-(2-carboxy)ethyl-3-aminopropylsilanetriol polymer.
[FIG. 2] FIG. 2 shows the ¹H-NMR spectrum of an aqueous solution obtained in Example 1-2 after atmospheric distillation, the aqueous solution containing an N-(2-carboxy-1-methyl)ethyl-3-aminopropylsilanetriol polymer.
[FIG. 3] FIG. 3 shows the ¹H-NMR spectrum of an aqueous solution obtained in Example 1-3 after atmospheric distillation, the aqueous solution containing an N-(2-carboxy-2-methyl)ethyl-3-aminopropylsilanetriol polymer.
[FIG. 4] FIG. 4 shows the ¹H-NMR spectrum of an aqueous solution obtained in Example 1-4 after atmospheric distillation, the aqueous solution containing an N-(2-carboxy)ethyl-3-aminopropylmethylsilanediol polymer.
[FIG. 5] FIG. 5 shows the ¹H-NMR spectrum of an aqueous solution obtained in Example 1-5 after atmospheric distillation, the aqueous solution containing an N-carboxymethyl-3-aminopropylsilanetriol polymer.
[FIG. 6] FIG. 6 shows the ¹H-NMR spectrum of an aqueous solution obtained by redissolving in water a solid N-(2-carboxy)ethyl-3-aminopropylsilanetriol polymer obtained in Example 2-1 after an accelerated test.
[FIG. 7] FIG. 7 shows the ¹H-NMR spectrum of an aqueous solution obtained by redissolving in water a solid N-(2-carboxy-1-methyl)ethyl-3-aminopropylsilanetriol polymer obtained in Example 2-2 after an accelerated test.
[FIG. 8] FIG. 8 shows the ¹H-NMR spectrum of an aqueous solution obtained by redissolving in water a solid N-(2-carboxy-2-methyl)ethyl-3-aminopropylsilanetriol polymer obtained in Example 2-3 after an accelerated test.
[FIG. 9] FIG. 9 shows the ¹H-NMR spectrum of an aqueous solution obtained by redissolving in water a solid N-(2-carboxy)ethyl-3-aminopropylmethylsilanediol polymer obtained in Example 2-4 after an accelerated test.
[FIG. 10] FIG. 10 shows the ¹H-NMR spectrum of an aqueous solution obtained by redissolving in water a solid N-carboxymethyl-3-aminopropylsilanetriol polymer obtained in Example 2-5 after an accelerated test.

### DESCRIPTION OF EMBODIMENTS

The present invention will be specifically described below.

A solid water-soluble polysiloxane compound having an amino acid-containing group according to the present invention is represented by the following general formula (1) (hereinafter referred to as "compound (1)").

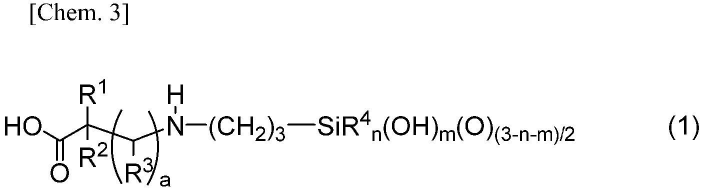

In the above general formula (1), R¹, R², and R³ each independently represent a hydrogen atom or a substituted or unsubstituted monovalent hydrocarbon group having 1 to 20 carbon atoms, preferably 1 to 10 carbon atoms, more preferably 1 to 5 carbon atoms.

Examples of the monovalent hydrocarbon group for R¹, R², and R³ include linear, branched, or cyclic alkyl groups, alkenyl groups, aryl groups, and aralkyl groups.

Specific examples thereof include linear alkyl groups such as methyl, ethyl, n-propyl, n-butyl, pentyl, hexyl, heptyl, octyl, decyl, dodecyl, tetradecyl, hexadecyl, and octadecyl groups; branched alkyl groups such as isopropyl, isobutyl, sec-butyl, tert-butyl, and 2-ethylhexyl groups; cyclic alkyl groups such as cyclopentyl and cyclohexyl groups; alkenyl groups such as vinyl, 1-propenyl, and 2-propenyl (allyl) groups; aryl groups such as phenyl, tolyl, and naphthyl groups; and aralkyl groups such as phenylmethyl and 2-phenylethyl groups.

Among them, each of R¹, R², and R³ is preferably a hydrogen atom or a substituted or unsubstituted linear, branched, or cyclic alkyl group, alkenyl group, aryl group, or aralkyl group having 1 to 5 carbon atoms, and particularly from the viewpoint of raw material availability, more preferably a hydrogen atom or an unsubstituted linear alkyl group having 1 to 3 carbon atoms, and still more preferably a hydrogen atom, a methyl group, or an ethyl group.

Note that some or all of the hydrogen atoms of the above hydrocarbon groups may be replaced with other substituents, and specific examples of the substituents include alkoxy groups having 1 to 6 carbon atoms, such as methoxy, ethoxy, (iso)propoxy, and phenoxy groups; halogen atoms such as a fluorine atom, a chlorine atom, a bromine atom, and an iodine atom; a cyano group, an amino group, an acyl group, an alkoxycarbonyl group having 1 to 5 carbon atoms, a carboxy group, an alkylsilyl group having 1 to 5 carbon atoms, and an alkoxysilyl group having 1 to 5 carbon atoms, and these may be used in combination. The substitution positions of these substituents are not limited, and the number of substituents is also not limited.

In the above general formula (1), R⁴ is a substituted or unsubstituted monovalent hydrocarbon group having 1 to 20 carbon atoms, preferably 1 to 10 carbon atoms, more preferably 1 to 5 carbon atoms.

Examples of the monovalent hydrocarbon group for R⁴ are the same as those exemplified for R¹, R², and R³.

In the above general formula (1), a is 0 or 1, preferably 1.
m is 0 or a positive number less than 3, preferably 0 or a positive number less than 2, more preferably 0 or a positive number less than or equal to 1.
n is 0 or 1, preferably 0.

However, n + m is 0 or a positive number less than 3, preferably 0 or a positive number less than 2, more preferably 0 or a positive number less than or equal to 1.

Specific examples of the compound (1) include an N-carboxymethyl-3-aminopropylsilanetriol polymer, an N-carboxymethyl-3-aminopropylmethylsilanediol polymer, an N-(1-carboxy)ethyl-3-aminopropylsilanetriol polymer, an N-(1-carboxy)ethyl-3-aminopropylmethylsilanediol polymer, an N-(1-carboxy-1-methyl)ethyl-3-aminopropylsilanetriol polymer, an N-(1-carboxy-1-methyl)ethyl-3-aminopropylmethylsilanediol polymer, an N-(2-carboxy)ethyl-3-aminopropylsilanetriol polymer, an N-(2-carboxy)ethyl-3-aminopropylmethylsilanediol polymer, an N-(2-carboxy-1-methyl)ethyl-3-aminopropylsilanetriol polymer, an N-(2-carboxy-1-methyl)ethyl-3-aminopropylmethylsilanediol polymer, an N-(2-carboxy-2-methyl)ethyl-3-aminopropylsilanetriol polymer, an N-(2-carboxy-2-methyl)ethyl-3-aminopropylmethylsilanediol polymer, an N-(2-carboxy-1-phenyl)ethyl-3-aminopropylsilanetriol polymer, an N-(2-carboxy-1-phenyl)ethyl-3-aminopropylmethylsilanediol polymer, an N-(2-carboxy-2-phenyl)ethyl-3-aminopropylsilanetriol polymer, an N-(2-carboxy-2-phenyl)ethyl-3-aminopropylmethylsilanediol polymer, an N-(1,2-dicarboxy)ethyl-3-aminopropylsilanetriol polymer, an N-(1,2-dicarboxy)ethyl-3-aminopropylmethylsilanediol polymer, an N-(2,3-dicarboxy)propyl-3-aminopropylsilanetriol polymer, and an N-(2,3-dicarboxy)propyl-3-aminopropylmethylsilanediol polymer.

Among them, an aminopropylsilanetriol polymer having one carboxy group, such as an N-carboxymethyl-3-aminopropylsilanetriol polymer, an N-(2-carboxy)ethyl-3-aminopropylsilanetriol polymer, an N-(2-carboxy)ethyl-3-aminopropylmethylsilanediol polymer, an N-(2-carboxy-1-methyl)ethyl-3-aminopropylsilanetriol polymer, or an N-(2-carboxy-2-methyl)ethyl-3-aminopropylsilanetriol polymer; and an aminopropylsilanetriol polymer having two carboxy groups, such as an N-(1,2-dicarboxy)ethyl-3-aminopropylsilanetriol polymer or an N-(2,3-dicarboxy)propyl-3-aminopropylsilanetriol polymer are particularly preferred.

Since the compound (1) is in solid form at 25°C, not only storage and transportation costs can be reduced but also high stability against heat, light, and oxygen can be achieved as compared with compounds in liquid form. Furthermore, since an aqueous solution obtained by redissolving the compound (1) is substantially the same as an aqueous solution before drying, the compound can be used for a longer period of time without changes in physical properties.

Without limitation, examples of a solvent for redissolving the compound (1) for use include water; hydrocarbon solvents such as pentane, hexane, cyclohexane, heptane, octane, isooctane, benzene, toluene, xylene, mesitylene, and tetralin; alcohol solvents such as methanol, ethanol, isopropanol, and tert-butanol; ether solvents such as diethyl ether, tetrahydrofuran, and dioxane; ester solvents such as ethyl acetate and butyl acetate; aprotic polar solvents such as acetonitrile; and chlorinated hydrocarbon solvents such as dichloromethane and chloroform. Among them, water, alcohol solvents, and aprotic polar solvents are preferred, water and alcohol solvents are more preferred, and water is still more preferred. These solvents may be used alone or in a combination of two or more thereof.

Next, a method for producing the solid water-soluble polysiloxane compound having an amino acid-containing group according to the present invention will be described.

The compound (1) is typically obtained by mixing a silane compound having an amino acid ester-containing group represented by the following general formula (2) (hereinafter referred to as "compound (2)") with water to perform a hydrolysis reaction and subsequently drying the mixture at atmospheric pressure or reduced pressure as appropriate. 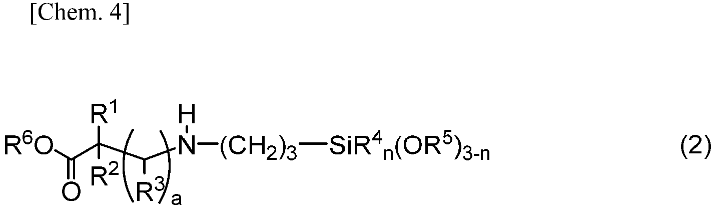 (wherein R¹ to R⁴, a, and n are as defined above.)

In the above general formula (2), R⁵ represents a substituted or unsubstituted monovalent hydrocarbon group having 1 to 20 carbon atoms, preferably 1 to 10 carbon atoms, more preferably 1 to 5 carbon atoms.

Examples of the monovalent hydrocarbon group for R⁵ are the same as those exemplified for R¹, R², and R³.

In the above general formula (2), R⁶ represents a substituted or unsubstituted monovalent hydrocarbon group having 1 to 20 carbon atoms, preferably 1 to 10 carbon atoms, more preferably 1 to 5 carbon atoms, or a triorganosilyl group represented by the following general formula (3).

-SiR7^{R}8^{R}9 (3)

Examples of the monovalent hydrocarbon group for R⁶ are the same as those exemplified for R¹, R², and R³.

In the above general formula (3), R⁷, R⁸, and R⁹ each independently represent a substituted or unsubstituted monovalent hydrocarbon group having 1 to 20 carbon atoms, preferably 1 to 10 carbon atoms, more preferably 1 to 5 carbon atoms.

Examples of the monovalent hydrocarbon groups for R⁷, R⁸, and R⁹ are the same as those exemplified for R¹, R², and R³.

Among them, each of R⁷, R⁸, and R⁹ is preferably an unsubstituted linear, branched, or cyclic alkyl group having 1 to 6 carbon atoms; an alkenyl group; or an aryl group, and particularly from the viewpoint of raw material availability, more preferably an unsubstituted linear or branched alkyl group having 1 to 4 carbon atoms; or an alkenyl group, and still more preferably a methyl group, an ethyl group, an isopropyl group, or a tert-butyl group.

Specific examples of the triorganosilyl group represented by the above general formula (3) include trimethylsilyl, ethyldimethylsilyl, diethylmethylsilyl, triethylsilyl, tert-butyldimethylsilyl, triisopropylsilyl, hexyldimethylsilyl, octyldimethylsilyl, decyldimethylsilyl, octadecyldimethylsilyl, phenyldimethylsilyl, diphenylmethylsilyl, triphenylsilyl, and tert-butyldiphenylsilyl groups.

Among them, from the viewpoint of raw material availability, trimethylsilyl, triethylsilyl, tert-butyldimethylsilyl, triisopropylsilyl, and tert-butyldiphenylsilyl groups are more preferred, and trimethylsilyl and triisopropylsilyl groups are still more preferred.

Specific examples of the compound (2) include N-(methoxycarbonyl)methyl-3-aminopropyltrimethoxysilane, N-(methoxycarbonyl)methyl-3-aminopropylmethyldimethoxysilane, N-(methoxycarbonyl)methyl-3-aminopropyltriethoxysilane, N-(methoxycarbonyl)methyl-3-aminopropylmethyldiethoxysilane, N-(ethoxycarbonyl)methyl-3-aminopropyltrimethoxysilane, N-(ethoxycarbonyl)methyl-3-aminopropylmethyldimethoxysilane, N-(ethoxycarbonyl)methyl-3-aminopropyltriethoxysilane, N-(ethoxycarbonyl)methyl-3-aminopropylmethyldiethoxysilane, N-(trimethylsiloxycarbonyl)methyl-3-aminopropyltrimethoxysilane, N-(trimethylsiloxycarbonyl)methyl-3-aminopropylmethyldimethoxysilane, N-(trimethylsiloxycarbonyl)methyl-3-aminopropyltriethoxysilane, N-(trimethylsiloxycarbonyl)methyl-3-aminopropylmethyldiethoxysilane, N-(triethylsiloxycarbonyl)methyl-3-aminopropyltrimethoxysilane, N-(triethylsiloxycarbonyl)methyl-3-aminopropylmethyldimethoxysilane, N-(triisopropylsiloxycarbonyl)methyl-3-aminopropyltrimethoxysilane, N-(triisopropylsiloxycarbonyl)methyl-3-aminopropylmethyldimethoxysilane, N-(1-methoxycarbonyl)ethyl-3-aminopropyltrimethoxysilane, N-(1-methoxycarbonyl)ethyl-3-aminopropylmethyldimethoxysilane, N-(1-methoxycarbonyl-1-methyl)ethyl-3-aminopropyltrimethoxysilane, N-(1-methoxycarbonyl-1-methyl)ethyl-3-aminopropylmethyldimethoxysilane, N-(2-methoxycarbonyl)ethyl-3-aminopropyltrimethoxysilane, N-(2-methoxycarbonyl)ethyl-3-aminopropylmethyldimethoxysilane, N-(2-methoxycarbonyl)ethyl-3-aminopropyltriethoxysilane, N-(2-methoxycarbonyl)ethyl-3-aminopropylmethyldiethoxysilane, N-(2-ethoxycarbonyl)ethyl-3-aminopropyltrimethoxysilane, N-(2-ethoxycarbonyl)ethyl-3-aminopropylmethyldimethoxysilane, N-(2-ethoxycarbonyl)ethyl-3-aminopropyltriethoxysilane, N-(2-ethoxycarbonyl)ethyl-3-aminopropylmethyldiethoxysilane, N-(2-trimethylsiloxycarbonyl)ethyl-3-aminopropyltrimethoxysilane, N-(2-trimethylsiloxycarbonyl)ethyl-3-aminopropylmethyldimethoxysilane, N-(2-trimethylsiloxycarbonyl)ethyl-3-aminopropyltriethoxysilane, N-(2-trimethylsiloxycarbonyl)ethyl-3-aminopropylmethyldiethoxysilane, N-(2-triethylsiloxycarbonyl)ethyl-3-aminopropyltrimethoxysilane, N-(2-triethylsiloxycarbonyl)ethyl-3-aminopropylmethyldimethoxysilane, N-(2-triisopropylsiloxycarbonyl)ethyl-3-aminopropyltrimethoxysilane, N-(2-triisopropylsiloxycarbonyl)ethyl-3-aminopropylmethyldimethoxysilane, N-(2-methoxycarbonyl-2-methyl)ethyl-3-aminopropyltrimethoxysilane, N-(2-methoxycarbonyl-2-methyl)ethyl-3-aminopropylmethyldimethoxysilane, N-(2-methoxycarbonyl-2-phenyl)ethyl-3-aminopropyltrimethoxysilane, N-(2-methoxycarbonyl-2-phenyl)ethyl-3-aminopropylmethyldimethoxysilane, N-(1-methyl-2-methoxycarbonyl)ethyl-3-aminopropyltrimethoxysilane, N-(1-methyl-2-methoxycarbonyl)ethyl-3-aminopropylmethyldimethoxysilane, N-(1-phenyl-2-methoxycarbonyl)ethyl-3-aminopropyltrimethoxysilane, N-(1-phenyl-2-methoxycarbonyl)ethyl-3-aminopropylmethyldimethoxysilane, N-[1,2-bis(methoxycarbonyl)]ethyl-3-aminopropyltrimethoxysilane, N-[1,2-bis(methoxycarbonyl)]ethyl-3-aminopropylmethyldimethoxysilane, N-[2,3-bis(methoxycarbonyl)]propyl-3-aminopropyltrimethoxysilane, and N-[2,3-bis(methoxycarbonyl)]propyl-3-aminopropylmethyldimethoxysilane.

Among them, N-(methoxycarbonyl)methyl-3-aminopropyltrimethoxysilane, N-(methoxycarbonyl)methyl-3-aminopropylmethyldimethoxysilane, N-(2-methoxycarbonyl)ethyl-3-aminopropyltrimethoxysilane, N-(2-methoxycarbonyl)ethyl-3-aminopropylmethyldimethoxysilane, N-(2-ethoxycarbonyl)ethyl-3-aminopropyltriethoxysilane, N-(2-trimethylsiloxycarbonyl)ethyl-3-aminopropyltrimethoxysilane, N-(2-triisopropylsiloxycarbonyl)ethyl-3-aminopropyltrimethoxysilane, N-(2-methoxycarbonyl-2-methyl)ethyl-3-aminopropyltrimethoxysilane, N-(1-methyl-2-methoxycarbonyl)ethyl-3-aminopropyltrimethoxysilane, N-(1-phenyl-2-methoxycarbonyl)ethyl-3-aminopropyltrimethoxysilane, N-[1,2-bis(methoxycarbonyl)]ethyl-3-aminopropyltrimethoxysilane, and N-[2,3-bis(methoxycarbonyl)]propyl-3-aminopropyltrimethoxysilane are particularly preferred.

Examples of the method for mixing the compound (2) with water include, for example, a method in which the compound (2) is added to water and a method in which water is added to the compound (2).

The amount of water used for the mixing is preferably 1.5 to 10,000 mol, more preferably 1.5 to 1,000 mol, still more preferably 1.5 to 100 mol per mole of the compound (2), from the viewpoint of progress of the hydrolysis reaction and energy load during drying.

Although the temperature and pressure during the above-described mixing process are not limited, the mixing process is performed at atmospheric pressure at preferably 0 to 120°C, more preferably 10 to 60°C. Although the reaction time is not limited, it is preferably 1 to 40 hours, more preferably 1 to 20 hours.

Although no catalyst is required, an acid such as hydrochloric acid, sulfuric acid, or acetic acid; or a base such as sodium hydroxide, potassium hydroxide, or sodium carbonate may be added.

During the mixing process, a solvent other than water may be used as appropriate. Examples of the solvent which can be used include hydrocarbon solvents such as pentane, hexane, cyclohexane, heptane, octane, isooctane, benzene, toluene, xylene, mesitylene, and tetralin; alcohol solvents such as methanol, ethanol, isopropanol, and tert-butanol; ether solvents such as diethyl ether, tetrahydrofuran, and dioxane; ester solvents such as ethyl acetate and butyl acetate; aprotic polar solvents such as acetonitrile; and chlorinated hydrocarbon solvents such as dichloromethane and chloroform. These solvents may be used alone or in a combination of two or more thereof.

The reaction solution obtained as described above is dried to remove the alcohol generated, water, and the solvent, thereby obtaining the compound (1) in solid form.

Although the method for drying is not limited, examples thereof include freeze-drying, zeodration, fluidized-bed drying, tray drying, vacuum evaporation, and spray drying, and vacuum evaporation and spray drying are preferred. These drying methods may be employed alone or in a combination of two or more thereof. Although the pressure and temperature during the drying process are not limited, the drying process is performed at atmospheric pressure or reduced pressure at preferably 0 to 200°C, more preferably 50 to 200°C.

### EXAMPLES

Although the present invention will be specifically described below with reference to Examples and Comparative Examples, the present invention is not limited to the following Examples.

### [Example 1-1] Synthesis of N-(2-carboxy)ethyl-3-aminopropylsilanetriol polymer

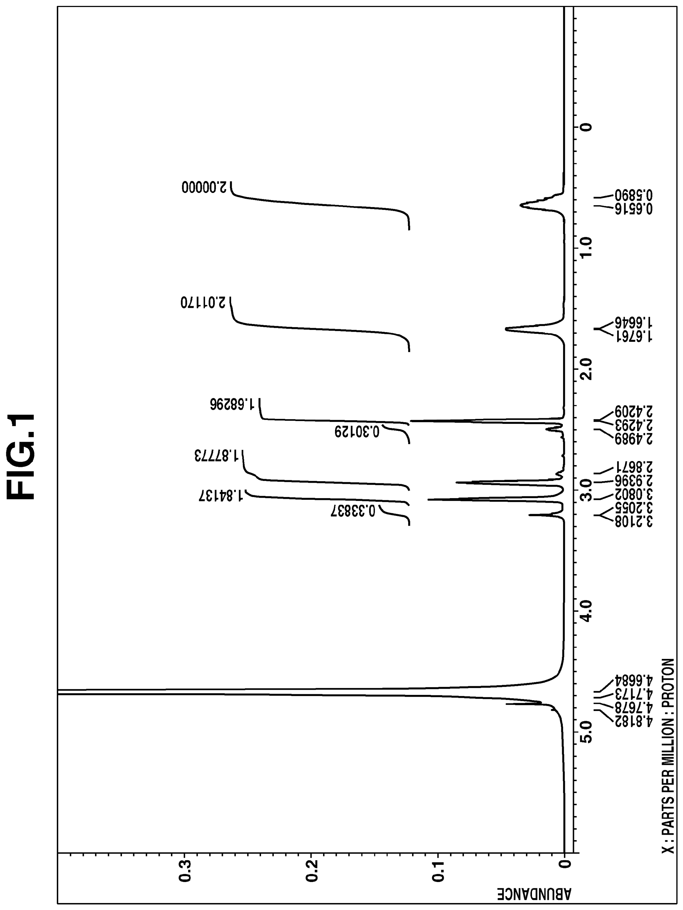

A flask equipped with a stirrer, a reflux condenser, a dropping funnel, and a thermometer was charged with 79.7 g of water, and 53.1 g (0.2 mol) of N-(2-methoxycarbonyl)ethyl-3-aminopropyltrimethoxysilane was added thereto. The resulting reaction solution was subjected to atmospheric distillation, thereby obtaining 68.8 g of an aqueous solution containing an N-(2-carboxy)ethyl-3-aminopropylsilanetriol polymer. The ¹H-NMR spectrum of the resulting aqueous solution is shown in the chart in FIG. 1.

Subsequently, 25.5 g of the resulting aqueous solution was dried under 0.2 kPa at 90°C to remove a low-boiling-point component, thereby obtaining 14.5 g of an N-(2-carboxy)ethyl-3-aminopropylsilanetriol polymer as a white solid.

### [Example 1-2] Synthesis of N-(2-carboxy-1-methyl)ethyl-3-aminopropylsilanetriol polymer

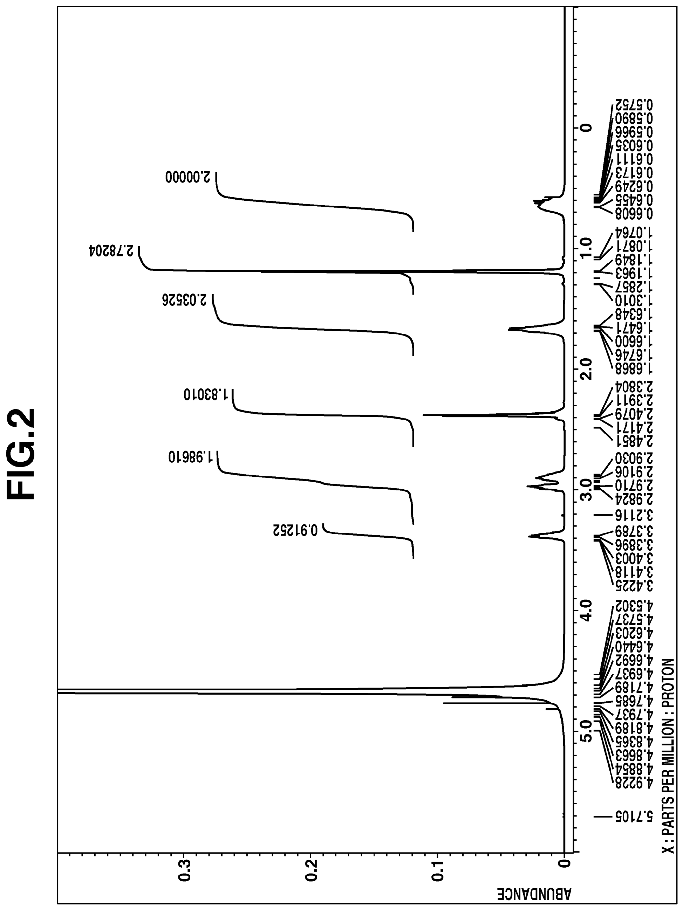

A flask equipped with a stirrer, a reflux condenser, a dropping funnel, and a thermometer was charged with 40.0 g of water, and 20.0 g (0.072 mol) of N-(2-methoxycarbonyl-1-methyl)ethyl-3-aminopropyltrimethoxysilane was added thereto. The resulting reaction solution was subjected to atmospheric distillation, thereby obtaining 25.6 g of an aqueous solution containing an N-(2-carboxy-1-methyl)ethyl-3-aminopropylsilanetriol polymer. The ¹H-NMR spectrum of the resulting aqueous solution is shown in the chart in FIG. 2.

Subsequently, the resulting aqueous solution was dried under 0.2 kPa at 90°C to remove a low-boiling-point component, thereby obtaining 11.6 g of an N-(2-carboxy-1-methyl)ethyl-3-aminopropylsilanetriol polymer as a white solid.

### [Example 1-3] Synthesis of N-(2-carboxy-2-methyl)ethyl-3-aminopropylsilanetriol polymer

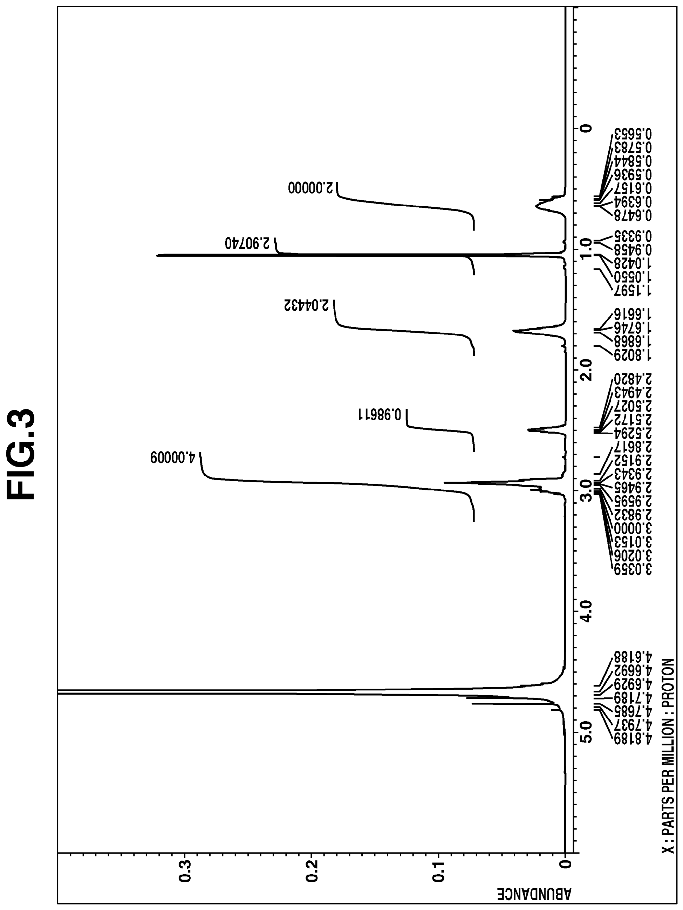

A flask equipped with a stirrer, a reflux condenser, a dropping funnel, and a thermometer was charged with 40.0 g of water, and 20.0 g (0.072 mol) of N-(2-methoxycarbonyl-2-methyl)ethyl-3-aminopropyltrimethoxysilane was added thereto. The resulting reaction solution was subjected to atmospheric distillation, thereby obtaining 32.8 g of an aqueous solution containing an N-(2-carboxy-2-methyl)ethyl-3-aminopropylsilanetriol polymer. The ¹H-NMR spectrum of the resulting aqueous solution is shown in the chart in FIG. 3.

Subsequently, the resulting aqueous solution was dried under 0.2 kPa at 90°C to remove a low-boiling-point component, thereby obtaining 14.7 g of an N-(2-carboxy-2-methyl)ethyl-3-aminopropylsilanetriol polymer as a white solid.

### [Example 1-4] Synthesis of N-(2-carboxy)ethyl-3-aminopropylmethylsilanediol polymer

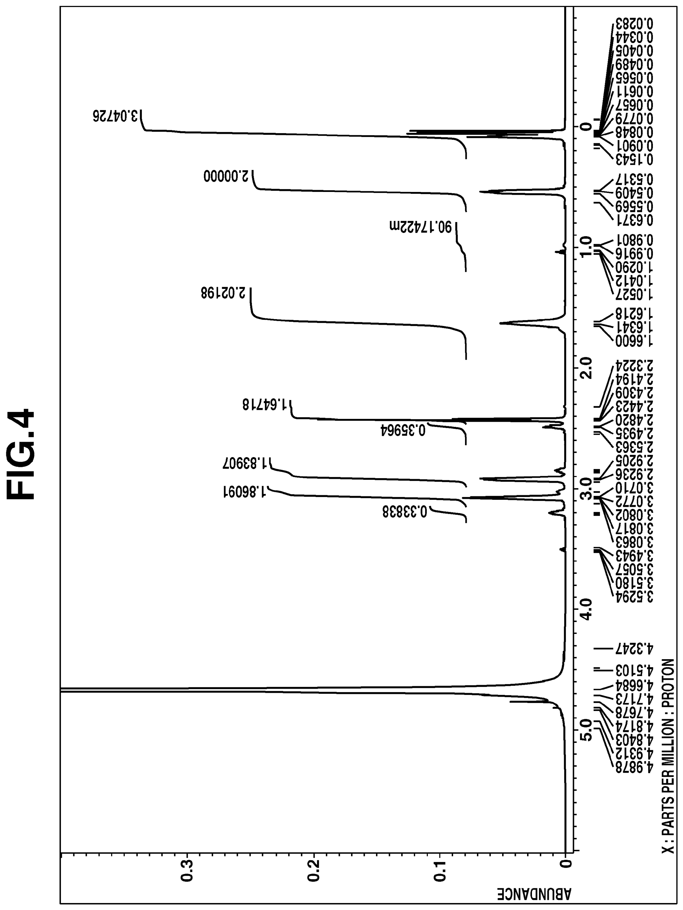

A flask equipped with a stirrer, a reflux condenser, a dropping funnel, and a thermometer was charged with 25.0 g of water, and 14.6 g (0.05 mol) of N-(2-ethoxycarbonyl)ethyl-3-aminopropylmethyldiethoxysilane was added thereto. The resulting reaction solution was subjected to atmospheric distillation, thereby obtaining 21.7 g of an aqueous solution containing an N-(2-carboxy)ethyl-3-aminopropylmethylsilanediol polymer. The ¹H-NMR spectrum of the resulting aqueous solution is shown in the chart in FIG. 4.

Subsequently, the resulting aqueous solution was dried under 0.2 kPa at 90°C to remove a low-boiling-point component, thereby obtaining 9.1 g of an N-(2-carboxy)ethyl-3-aminopropylmethylsilanediol polymer as a white solid.

### [Example 1-5] Synthesis of N-carboxymethyl-3-aminopropylsilanetriol polymer

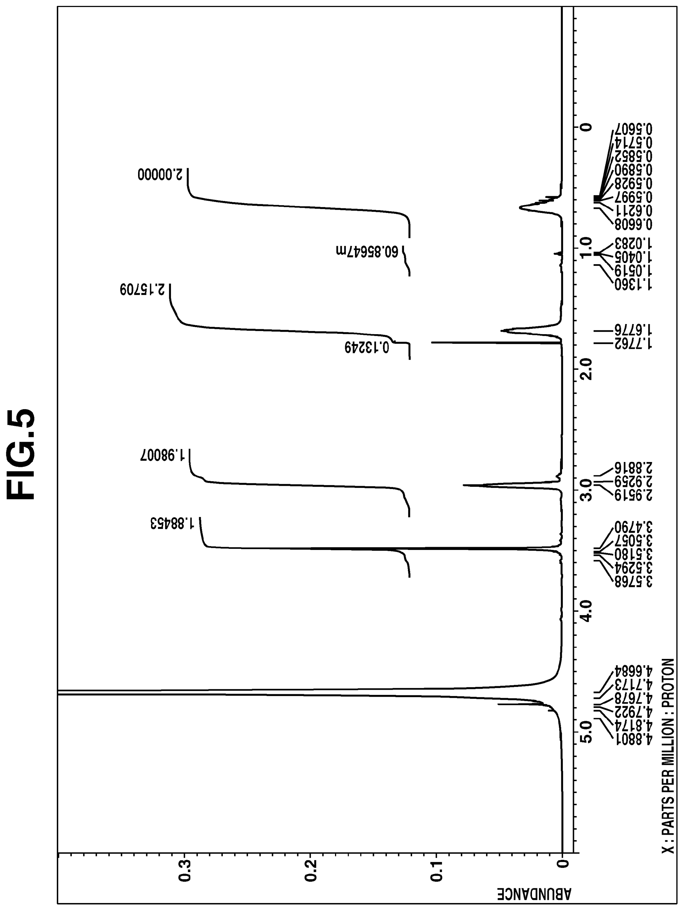

A flask equipped with a stirrer, a reflux condenser, a dropping funnel, and a thermometer was charged with 35.1 g of water and 0.20 g of acetic acid, and 20.0 g (0.065 mol) of N-ethoxycarbonylmethyl-3-aminopropyltriethoxysilane was added thereto. The resulting reaction solution was subjected to atmospheric distillation, thereby obtaining 24.3 g of an aqueous solution containing an N-carboxymethyl-3-aminopropylsilanetriol polymer. The ¹H-NMR spectrum of the resulting aqueous solution is shown in the chart in FIG. 5.

Subsequently, the resulting aqueous solution was dried under 0.2 kPa at 90°C to remove a low-boiling-point component, thereby obtaining 11.4 g of an N-carboxymethyl-3-aminopropylsilanetriol polymer as a white solid.

### [Example 2-1]

The solid N-(2-carboxy)ethyl-3-aminopropylsilanetriol polymer obtained in Example 1-1 was subjected to an accelerated test (heated at 60°C for 2 weeks), followed by observation of its appearance. As a result, the solid N-(2-carboxy)ethyl-3-aminopropylsilanetriol polymer was white, with no change in appearance from before the accelerated test.

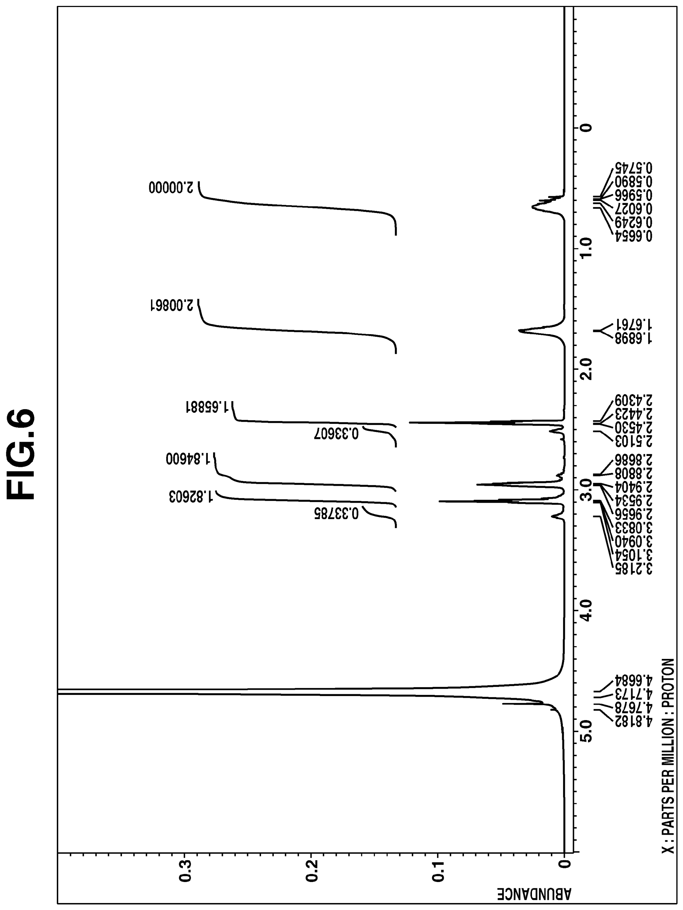

In addition, when 1.0 g of the solid N-(2-carboxy)ethyl-3-aminopropylsilanetriol polymer after the accelerated test was dissolved in 2.5 g of water, a colorless and transparent aqueous solution was obtained. The ¹H-NMR spectrum of the resulting aqueous solution is shown in the chart in FIG. 6.

It was found from FIG. 1 and FIG. 6 that the aqueous solution obtained by redissolving in water the solid N-(2-carboxy)ethyl-3-aminopropylsilanetriol polymer after the accelerated test was substantially the same as the aqueous solution before drying in Example 1-1.

### [Example 2-2]

The solid N-(2-carboxy-1-methyl)ethyl-3-aminopropylsilanetriol polymer obtained in Example 1-2 was subjected to an accelerated test (heated at 60°C for 2 weeks), followed by observation of its appearance. As a result, the solid N-(2-carboxy-1-methyl)ethyl-3-aminopropylsilanetriol polymer was white, with no change in appearance from before the accelerated test.

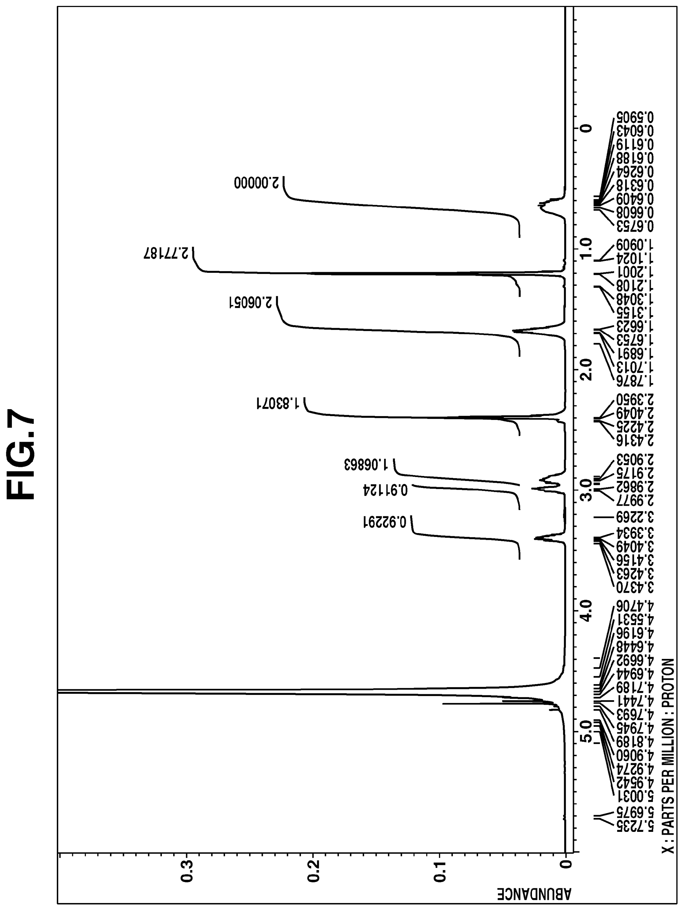

In addition, when 1.0 g of the solid N-(2-carboxy-1-methyl)ethyl-3-aminopropylsilanetriol polymer after the accelerated test was dissolved in 2.5 g of water, a colorless and transparent aqueous solution was obtained. The ¹H-NMR spectrum of the resulting aqueous solution is shown in the chart in FIG. 7.

It was found from FIG. 2 and FIG. 7 that the aqueous solution obtained by redissolving in water the solid N-(2-carboxy-1-methyl)ethyl-3-aminopropylsilanetriol polymer after the accelerated test was substantially the same as the aqueous solution before drying in Example 1-2.

### [Example 2-3]

The solid N-(2-carboxy-2-methyl)ethyl-3-aminopropylsilanetriol polymer obtained in Example 1-3 was subjected to an accelerated test (heated at 60°C for 2 weeks), followed by observation of its appearance. As a result, the solid N-(2-carboxy-2-methyl)ethyl-3-aminopropylsilanetriol polymer was white, with no change in appearance from before the accelerated test.

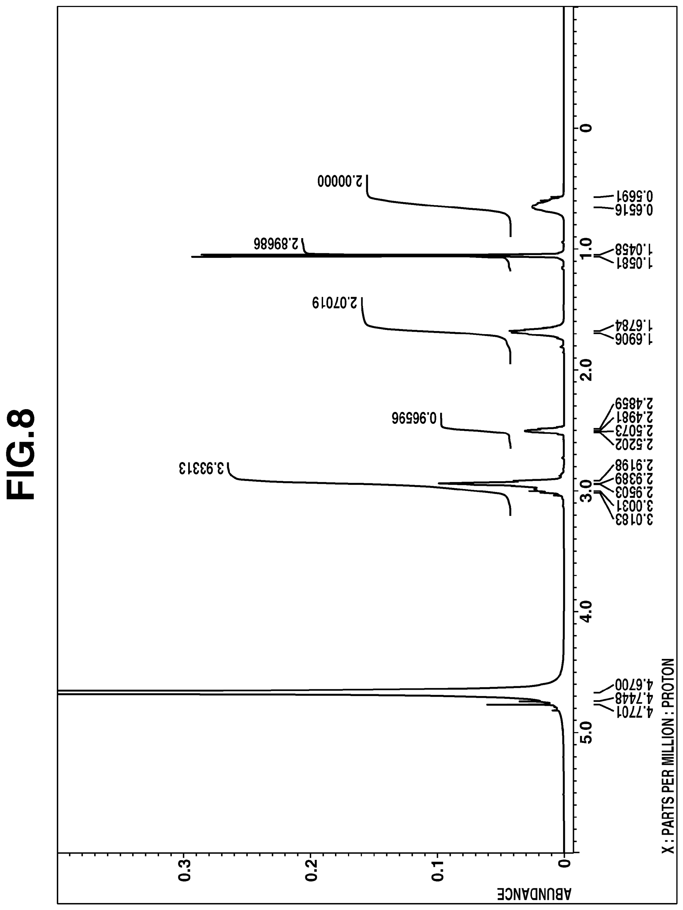

In addition, when 1.0 g of the solid N-(2-carboxy-2-methyl)ethyl-3-aminopropylsilanetriol polymer after the accelerated test was dissolved in 2.5 g of water, a colorless and transparent aqueous solution was obtained. The ¹H-NMR spectrum of the resulting aqueous solution is shown in the chart in FIG. 8.

It was found from FIG. 3 and FIG. 8 that the aqueous solution obtained by redissolving in water the solid N-(2-carboxy-2-methyl)ethyl-3-aminopropylsilanetriol polymer after the accelerated test was substantially the same as the aqueous solution before drying in Example 1-3.

### [Example 2-4]

The solid N-(2-carboxy)ethyl-3-aminopropylmethylsilanediol polymer obtained in Example 1-4 was subjected to an accelerated test (heated at 60°C for 2 weeks), followed by observation of its appearance. As a result, the solid N-(2-carboxy)ethyl-3-aminopropylmethylsilanediol polymer was white, with no change in appearance from before the accelerated test.

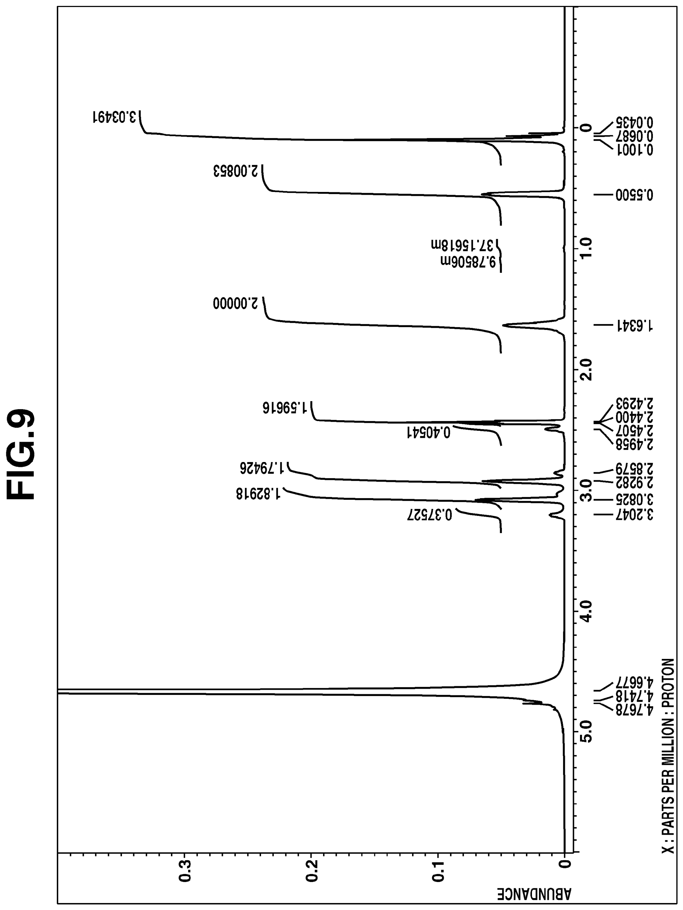

In addition, when 1.0 g of the solid N-(2-carboxy)ethyl-3-aminopropylmethylsilanediol polymer after the accelerated test was dissolved in 2.5 g of water, a colorless and transparent aqueous solution was obtained. The ¹H-NMR spectrum of the resulting aqueous solution is shown in the chart in FIG. 9.

It was found from FIG. 4 and FIG. 9 that the aqueous solution obtained by redissolving in water the solid N-(2-carboxy)ethyl-3-aminopropylmethylsilanediol polymer after the accelerated test was substantially the same as the aqueous solution before drying in Example 1-4.

### [Example 2-5]

The solid N-carboxymethyl-3-aminopropylsilanetriol polymer obtained in Example 1-5 was subjected to an accelerated test (heated at 60°C for 2 weeks), followed by observation of its appearance. As a result, the solid N-carboxymethyl-3-aminopropylsilanetriol polymer was white, with no change in appearance from before the accelerated test.

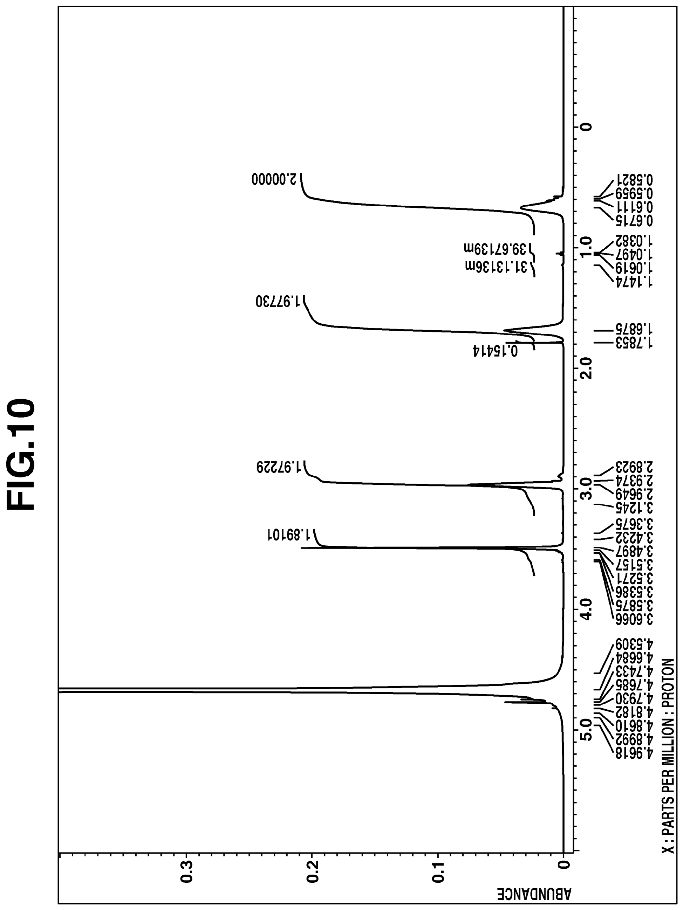

In addition, when 1.0 g of the solid N-carboxymethyl-3-aminopropylsilanetriol polymer after the accelerated test was dissolved in 2.5 g of water, a colorless and transparent aqueous solution was obtained. The ¹H-NMR spectrum of the resulting aqueous solution is shown in the chart in FIG. 10.

It was found from FIG. 5 and FIG. 10 that the aqueous solution obtained by redissolving in water the solid N-carboxymethyl-3-aminopropylsilanetriol polymer after the accelerated test was substantially the same as the aqueous solution before drying in Example 1-5.

### [Comparative Example 1]

Water was added to 15.0 g of the aqueous solution obtained after atmospheric distillation in Example 1-1 to adjust the concentration of the N-(2-carboxy)ethyl-3-aminopropylsilanetriol polymer to the same level as that in the aqueous solution of Example 2-1, thereby obtaining 27.3 g of a transparent aqueous solution.

As a result of an accelerated test on the resulting aqueous solution by the same method as Example 2-1, the aqueous solution turned yellow.

## Claims

1. A solid water-soluble polysiloxane compound comprising an amino acid-containing group, the compound being represented by the following general formula (1): 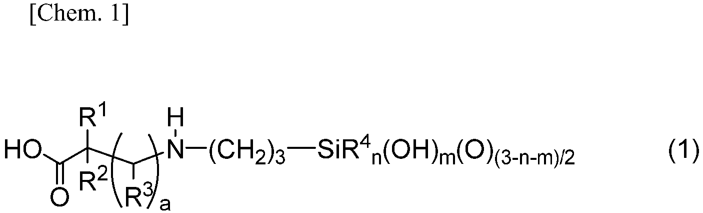 wherein R¹, R², and R³ each independently represent a hydrogen atom or a substituted or unsubstituted monovalent hydrocarbon group having 1 to 20 carbon atoms, R⁴ represents a substituted or unsubstituted monovalent hydrocarbon group having 1 to 20 carbon atoms, a is 0 or 1, m is 0 or a positive number less than 3, n is 0 or 1, and n + m is 0 or a positive number less than 3.

2. A method for producing the solid water-soluble polysiloxane compound having an amino acid-containing group according to claim 1, the method comprising mixing a silane compound having an amino acid ester-containing group with water to perform a hydrolysis reaction and subsequently drying the mixture, the silane compound being represented by the following general formula (2): 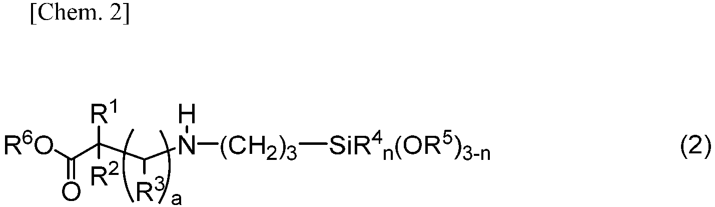 wherein R¹ to R⁴, a, and n are as defined above, R⁵ represents a substituted or unsubstituted monovalent hydrocarbon group having 1 to 20 carbon atoms, and R⁶ represents a substituted or unsubstituted monovalent hydrocarbon group having 1 to 20 carbon atoms or a triorganosilyl group represented by the following general formula (3):
-SiR7^{R}8^{R}9 (3)
wherein R⁷, R⁸, and R⁹ each independently represent an unsubstituted monovalent hydrocarbon group having 1 to 20 carbon atoms.
